(19) Europäisches Patentamt
European Patent Office
Office européen des brevets

(11) EP 4 650 761 A1

(12) EUROPEAN PATENT APPLICATION
published in accordance with Art. 153(4) EPC

(43) Date of publication:
19.11.2025 Bulletin 2025/47

(51) International Patent Classification (IPC):
G01N 23/223 (2006.01)   G01N 23/2209 (2018.01)

(21) Application number: 24760243.6

(52) Cooperative Patent Classification (CPC):
G01N 23/2209; G01N 23/223

(22) Date of filing: 15.02.2024

(86) International application number:
PCT/JP2024/005269

(87) International publication number:
WO 2024/176942 (29.08.2024 Gazette 2024/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.02.2023 JP 2023027358

(71) Applicant: Rigaku Corporation
Akishima-shi
Tokyo 196-8666 (JP)

(72) Inventors:
• HARA, Shinya
Takatsuki-shi, Osaka 569-1146 (JP)
• YAMADA, Yasujiro
Takatsuki-shi, Osaka 569-1146 (JP)
• MARUKO, Yuri
Takatsuki-shi, Osaka 569-1146 (JP)

(74) Representative: Dr. Gassner & Partner mbB
Wetterkreuz 3
91058 Erlangen (DE)

(54) X-RAY FLUORESCENCE SPECTROMETER

(57) In an X-ray fluorescence spectrometer of the present invention, a quantification unit calculates a lower limit of detection on the basis of a calibration curve equation including an absorption/excitation correction term and an overlap correction term.

Fig. 1

**Description**

CROSS REFERENCE TO THE RELATED APPLICATION

This application is based on and claims Convention priority to Japanese patent application No. 2023-027358, filed February 24, 2023, the entire disclosure of which is herein incorporated by reference as a part of this application.

BACKGROUND OF THE INVENTION

(Field of the Invention)

The present invention relates to an X-ray fluorescence spectrometer that irradiates a sample with primary X-rays and that obtains, on the basis of measured intensities of fluorescent X-rays generated through the irradiation, a content of each component in the sample by a quantification unit in which a calibration curve method that involves performing absorption/excitation correction and overlap correction is employed.

(Description of Related Art)

Conventionally, X-ray fluorescence spectrometers that perform quantitative analysis are roughly classified into: X-ray fluorescence spectrometers that perform quantitative analysis based on a calibration curve method; and X-ray fluorescence spectrometers that perform quantitative analysis based on a fundamental parameter method (also referred to as "FP method"). In the quantitative analysis based on the calibration curve method, in order to analyze an unknown sample, a set of standard samples in which contents of components are known is used to obtain a calibration curve as a correlation between the content of each of the components and the measured intensity of fluorescent X-rays (measurement line) from a measurement element corresponding to the component. The component is an element or a compound. When the component is an element, the element itself is the measurement element corresponding to the component, and meanwhile, when the component is a compound, an element representing the compound is the measurement element corresponding to the component.

In the quantitative analysis based on the calibration curve method, absorption/excitation correction related to absorption/excitation due to a coexisting element and overlap correction related to overlapping of interfering lines are sometimes performed in addition to background correction related to a background. Also, a so-called lower limit of detection is sometimes obtained as one of indexes for ascertaining the performance of a created calibration curve. The lower limit of detection is a function of a background intensity and a measurement time. Regarding this lower limit of detection, for example, Patent Document 1 describes an X-ray fluorescence spectrometer in which the measurement time is changed such that the lower limit of detection is kept unchanged even when influence of a coexisting element in a sample leads to change in background intensity depending on the sample.

[Related Document]

[Patent Document]

[Patent Document 1]    JP Laid-open Patent Publication No. 2006-132945

SUMMARY OF THE INVENTION

However, the X-ray fluorescence spectrometer described in Patent Document 1 has the following problems. That is, although focus is placed on the fact that influence of a coexisting element in a sample leads to change in background intensity depending on the sample, none of absorption/excitation correction related to absorption/excitation due to a coexisting element in a sample, overlap correction related to overlapping of interfering lines, and influences of these corrections on the lower limit of detection is considered at all. Also, in the first place, the related document does not contain description about how to calculate a lower limit of detection in a calibration curve method that involves performing the absorption/excitation correction and the overlap correction.

The present invention has been made in view of the above conventional problems, and an object of the present invention is to provide an X-ray fluorescence spectrometer that obtains a content of each component in a sample by a quantification unit in which a calibration curve method that involves performing absorption/excitation correction and overlap correction is employed, the spectrometer making it possible to appropriately calculate a lower limit of detection.

To achieve the object, the present invention is directed to an X-ray fluorescence spectrometer including a quantification unit in which a calibration curve method that involves performing absorption/excitation correction and overlap correction is employed, the X-ray fluorescence spectrometer being configured to irradiate a sample with primary X-rays and obtain a content of each component in the sample by the quantification unit on the basis of measured intensities of fluorescent X-rays generated through the irradiation, wherein the quantification unit calculates a lower limit of detection of a calibration curve by using an equation (1) or (2) and causes a displaying unit to display the lower limit of detection, the equations (1) and (2) being as follows:

[Math. 1]

$$L.L.D. = \frac{\partial W_i}{\partial I_i} 3 \cdot \sigma I_{BG}$$

$$= 3 \left\{ \left( 2A \left( I_{BG} + \sum_j \alpha_j I_j^{Ovlp} \right) + B \right) \left( 1 + \sum_j M_{ij} C_j \right) \right.$$

$$+ \left( A \left( I_{BG} + \sum_j \alpha_j I_j^{Ovlp} \right)^2 + B \left( I_{BG} + \sum_j \alpha_j I_j^{Ovlp} \right) + C \right) \frac{\partial \sum_j M_{ij} C_j}{\partial I_i}$$

$$\left. + \frac{\partial \sum_j O_{ij} C_j}{\partial I_i} \right\} \cdot \sqrt{\frac{I_{BG}}{1000 \cdot t_{meas}}} \quad \ldots \ldots (1)$$

*with,*

*in a case of A =0,* $I_{BG} = -\frac{C}{B} - \frac{\sum_j O_{ij} C_j}{B(1+\sum_j M_{ij} C_j)} - \sum_j \alpha_j I_j^{Ovlp}$ *being satisfied,*

*in a case of A ≠0,* $I_{BG} = \frac{-B + \sqrt{B^2 - 4A \left( C + \frac{\sum_j O_{ij} C_j}{1+\sum_j M_{ij} C_j} \right)}}{2A} - \sum_j \alpha_j I_j^{Ovlp}$ *being satisfied, and*

*a theoretical standard deviation of a BG intensity satisfying* $\sigma I_{BG} = \sqrt{\frac{I_{BG}}{1000 \cdot t_{meas}}}$ *; and*

[Math. 2]

$$L.L.D. = \frac{\partial W_i}{\partial I_i} 3 \cdot \sigma I_{BG}$$

$$= 3 \left\{ B \left( 1 + \sum_j M_{ij} C_j \right) + B \left( I_{BG} + \sum_j \alpha_j I_j^{Ovlp} \right) \frac{\partial \sum_j M_{ij} C_j}{\partial I_i} + \frac{\partial \sum_j O_{ij} C_j}{\partial I_i} \right\}$$

$$\cdot \sqrt{\frac{I_{BG}}{1000 \cdot t_{meas}}} \quad \ldots \ldots (2)$$

*with*

$I_{BG} = -\frac{C + \sum_j O_{ij} C_j}{B(1+\sum_j M_{ij} C_j)}$ *being satisfied (in a case of B=0, L.L.D. cannot be calculated), and*

*a theoretical standard deviation of a BG intensity satisfying* $\sigma I_{BG} = \sqrt{\frac{I_{BG}}{1000 \cdot t_{meas}}}$ *,*

*where*

$W_i$ represents a content of an analytical component i,

A, B, and C represent calibration curve constants,

$I_i$ represents a measured intensity of analytical lines of the component i,

$\alpha_j$ represents an overlap correction coefficient of overlap lines j,

$I_j^{Ovlp}$ represents a measured intensity of the overlap lines j,

$M_{ij}$ represents an absorption/excitation correction coefficient of a component j with respect to the component i,

$C_j$ represents a content of the component j or an intensity of analytical lines of the component j,

$O_{ij}$ represents an overlap correction coefficient of the component j with respect to the component i,

$I_{BG}$ represents a background intensity,

$\sigma I_{BG}$ represents a theoretical standard deviation of the background intensity, and

$t_{meas}$ represents a measurement time.

In the X-ray fluorescence spectrometer of the present invention, a lower limit of detection is calculated on the basis of either of the calibration curve equations including the absorption/excitation correction term and the overlap correction term, whereby a lower limit of detection can be appropriately calculated with influences of absorption/excitation correction and overlap correction being reflected.

In the X-ray fluorescence spectrometer of the present invention, the quantification unit may calculate, for each of correction components used for calculating the lower limit of detection, a lower limit of detection when a content of, or a measured intensity regarding, the correction component is changed to a specified value, and may cause the displaying unit to display the lower limit of detection calculated when the content or the measured intensity has been changed to the specified value. In this case, it is possible to ascertain, for example: a lower limit of detection in each of standard samples; a lower limit of detection in a representative composition; and the like.

In the X-ray fluorescence spectrometer of the present invention, the quantification unit may calculate, for each of correction components used for calculating the lower limit of detection, a proportion of change in the lower limit of detection when a content of, or a measured intensity regarding, the correction component is changed in a predetermined proportion, and may cause the displaying unit to display the proportion. In this case, it is possible to ascertain, for example: which of the correction components has caused the lower limit of detection to deteriorate most significantly; which of the correction components has caused the lower limit of detection to become most favorable; and the like.

Any combination of at least two constructions, disclosed in the appended claims and/or the specification and/or the accompanying drawing should be construed as included within the scope of the present invention. In particular, any combination of two or more of the appended claims should be equally construed as included within the scope of the present invention.

BRIEF DESCRIPTION OF THE DRAWINGS

In any event, the present invention will become more clearly understood from the following description of a preferred embodiment thereof, when taken in conjunction with the accompanying drawing. However, the embodiment and the drawing are given only for the purpose of illustration and explanation, and are not to be taken as limiting the scope of the present invention in any way whatsoever, which scope is to be determined by the appended claims. In the accompanying drawing, like reference numerals are used to denote like parts throughout the several views, and:

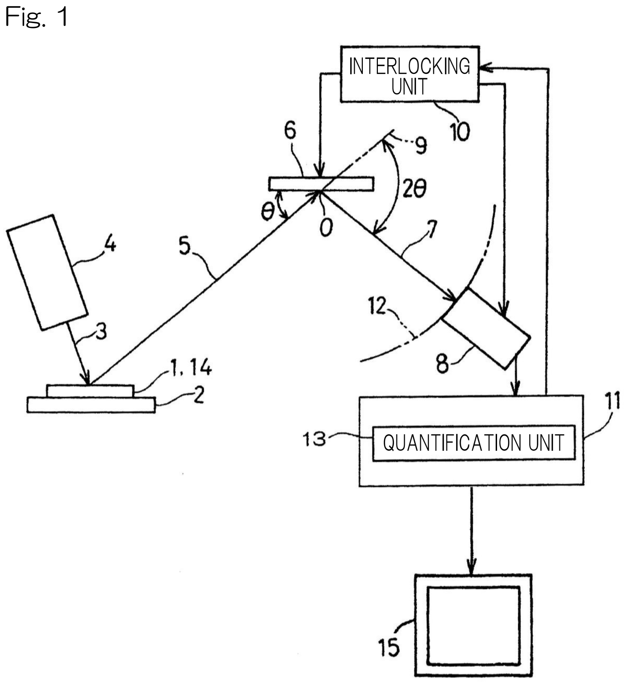

Fig. 1 is a schematic diagram showing an X-ray fluorescence spectrometer according to an embodiment of the present invention.

DESCRIPTION OF EMBODIMENTS

Hereinafter, an X-ray fluorescence spectrometer according to an embodiment of the present invention will be described. As shown in Fig. 1, the X-ray fluorescence spectrometer according to the present embodiment is a sequential X-ray fluorescence spectrometer that irradiates a sample 1, 14 (including both an unknown sample 1 and a standard sample 14) with primary X-rays 3 and that measures intensities of secondary X-rays 5 generated through the irradiation. The X-ray fluorescence spectrometer includes: a sample stage 2 on which the sample 1, 14 is placed; an X-ray source 4 (such as an X-ray tube) which irradiates the sample 1, 14 with the primary X-rays 3; a spectroscopic device 6 which monochromates the secondary X-rays 5 (such as fluorescent X-rays) generated from the sample 1, 14; and a detector 8 on which secondary X-rays 7 obtained through the monochromation by the spectroscopic device 6 are incident and which detects an intensity of the secondary X-rays 7. An output of the detector 8 is input through an amplifier, a pulse height analyzer, a counting unit, and the like which are not shown, to a controller 11 (such as a computer) for controlling the entire spectrometer.

The X-ray fluorescence spectrometer according to the present embodiment is a wavelength dispersive and sequential X-ray fluorescence spectrometer and includes an interlocking unit 10 (i.e., so-called goniometer) which interlocks the spectroscopic device 6 and the detector 8 so as to change the wavelengths of the secondary X-rays 7 to be incident on the detector 8. When the secondary X-rays 5 are incident on the spectroscopic device 6 at a certain incident angle θ, an extension line 9 of the secondary X-rays 5 and the secondary X-rays 7 obtained through the monochromation (diffraction) by the spectroscopic device 6 form a spectroscopic angle 2θ which is 2 times the incident angle θ. The interlocking unit 10 rotates the spectroscopic device 6 about an axis O passing through the center of a surface of the spectroscopic device 6 and perpendicular to the drawing sheet and rotates the detector 8 around the axis O along a circle 12 by an angle that is 2 times the angle of the rotation of the spectroscopic device 6 such that: the spectroscopic angle 2θ is changed so as to change the wavelengths of the secondary X-rays 7 to be obtained through the monochromation; and the secondary X-rays 7 obtained through the monochromation are incident on the detector 8. The value of the spectroscopic angle 2θ (2θ angle) is input from the interlocking unit 10 to the controller 11.

The X-ray fluorescence spectrometer according to the present embodiment includes a quantification unit 13 as a program installed in the controller 11 and obtains, on the basis of measured intensities of the fluorescent X-rays 5, contents of components in the sample 1, 14 by the quantification unit 13 in which a calibration curve method that involves performing absorption/excitation correction and overlap correction is employed. Selection of a standard sample and a correction component at the time of creating a calibration curve is performed by an operator, as is conventionally performed. Then, the quantification unit 13 calculates, by using an equation (1) or (2), a lower limit of detection LLD (written as L.L.D. in the equations) of a calibration curve and causes a displaying unit 15 (such as a liquid crystal display) to display the lower limit of detection LLD. An operator selects and specifies which equation out of the equations (1) and (2) is to be used. In the present invention, the X-ray fluorescence spectrometer may be a wavelength dispersive and simultaneous multi-elements analysis type X-ray fluorescence spectrometer or may be an energy dispersive X-ray fluorescence spectrometer. The equations (1) and (2) are as follows:

[Math. 3]

$$L.L.D. = \frac{\partial W_i}{\partial I_i} 3 \cdot \sigma I_{BG}$$

$$= 3\left\{ \left( 2A\left( I_{BG} + \sum_j \alpha_j I_j^{Ovlp} \right) + B \right) \left( 1 + \sum_j M_{ij} C_j \right) \right.$$

$$+ \left( A\left( I_{BG} + \sum_j \alpha_j I_j^{Ovlp} \right)^2 + B\left( I_{BG} + \sum_j \alpha_j I_j^{Ovlp} \right) + C \right) \frac{\partial \sum_j M_{ij} C_j}{\partial I_i}$$

$$\left. + \frac{\partial \sum_j O_{ij} C_j}{\partial I_i} \right\} \cdot \sqrt{\frac{I_{BG}}{1000 \cdot t_{meas}}} \quad \ldots \ldots (1)$$

*with,*

*in a case of A =0,* $I_{BG} = -\frac{C}{B} - \frac{\sum_j O_{ij} C_j}{B\left(1 + \sum_j M_{ij} C_j\right)} - \sum_j \alpha_j I_j^{Ovlp}$ *being satisfied,*

*in a case of A ≠0,* $I_{BG} = \frac{-B + \sqrt{B^2 - 4A\left(C + \frac{\sum_j O_{ij} C_j}{1 + \sum_j M_{ij} C_j}\right)}}{2A} - \sum_j \alpha_j I_j^{Ovlp}$ *being satisfied, and*

*a theoretical standard deviation of a BG intensity satisfying* $\sigma I_{BG} = \sqrt{\frac{I_{BG}}{1000 \cdot t_{meas}}}$ *; and*

[Math. 4]

$$L.L.D. = \frac{\partial W_i}{\partial I_i} 3 \cdot \sigma I_{BG}$$

$$= 3 \left\{ B \left( 1 + \sum_j M_{ij} C_j \right) + B \left( I_{BG} + \sum_j \alpha_j I_j^{Ovlp} \right) \frac{\partial \sum_j M_{ij} C_j}{\partial I_i} + \frac{\partial \sum_j O_{ij} C_j}{\partial I_i} \right\}$$

$$\cdot \sqrt{\frac{I_{BG}}{1000 \cdot t_{meas}}} \quad \cdots (2)$$

with

$$I_{BG} = -\frac{C + \sum_j O_{ij} C_j}{B(1 + \sum_j M_{ij} C_j)} \quad \text{being satisfied (in a case of B=0, L.L.D. cannot be calculated), and}$$

a theoretical standard deviation of a BG intensity satisfying $\sigma I_{BG} = \sqrt{\dfrac{I_{BG}}{1000 \cdot t_{meas}}}$ ,

where

$W_i$ represents a content of an analytical component i,

A, B, and C represent calibration curve constants,

$I_i$ represents a measured intensity of analytical lines of the component i,

$\alpha_j$ represents an overlap correction coefficient of overlap lines j,

$I_j^{Ovlp}$ represents a measured intensity of the overlap lines j,

$M_{ij}$ represents an absorption/excitation correction coefficient of a component j with respect to the component i,

$C_j$ represents a content of the component j or an intensity of analytical lines of the component j,

$O_{ij}$ represents an overlap correction coefficient of the component j with respect to the component i,

$I_{BG}$ represents a background intensity,

$\sigma I_{BG}$ represents a theoretical standard deviation of the background intensity, and

$t_{meas}$ represents a measurement time.

The equations (1) and (2) are respectively derived from the following calibration curve equations (3) and (4):
[Math 5]

$$W_i = \left( A \left( I_i + \sum_j \alpha_j I_j^{Ovlp} \right)^2 + B \left( I_i + \sum_j \alpha_j I_j^{Ovlp} \right) + C \right) \cdot \left( 1 + \sum_j M_{ij} C_j \right) + \sum_j O_{ij} C_j \quad \cdots (3)$$

$$W_i = B \cdot \left( I_i + \sum_j \alpha_j I_j^{Ovlp} \right) \left( 1 + \sum_j M_{ij} C_j \right) + C + \sum_j O_{ij} C_j \quad \cdots (4)$$

where

$W_i$ represents a content of the analytical component i,

A, B, and C represent calibration curve constants,

$I_i$ represents a measured intensity of the analytical lines of the component i,

$\alpha_j$ represents an overlap correction coefficient of the overlap lines j,

$I_j^{Ovlp}$ represents a measured intensity of the overlap lines j,

$M_{ij}$ represents an absorption/excitation correction coefficient of the component j with respect to the component i,

$C_j$ represents a content of the component j or an intensity of the analytical lines of the component j, and

$O_{ij}$ represents an overlap correction coefficient of the component j with respect to the component i.

Here, the equation (3) is a calibration curve equation for performing absorption/excitation correction according to the relevant JIS standards and performing overlap correction with respect to the content W and the measured intensity I, and the equation (4) is a calibration curve equation for performing absorption/excitation correction according to the relevant ISO standards and performing overlap correction with respect to the content W and the measured intensity I. In these calibration curve equations, the measured intensity I is a gross intensity.

For example, the equation (1) for calculating a lower limit of detection is derived from the calibration curve equation (3) as follows. First, the equation (3) is solved in relation to I with W=0 being satisfied, whereby a background intensity $I_{BG}$ is obtained as described below the preposition "with" in the equation (1). Then, a theoretical standard deviation $\sigma I_{BG}$ of the background intensity is obtained according to $\sigma I_{BG}=(I_{BG}/100t_{meas})^{1/2}$. Furthermore, a lower limit of detection LLD is calculated as in the equation (1) by multiplying $\sigma I_{BG}$ by 3 and multiplying the resultant value by a calibration curve gradient. The equation (2) for calculating a lower limit of detection is derived from the calibration curve equation (4) in the same manner.

In the X-ray fluorescence spectrometer of the present invention, a lower limit of detection is calculated on the basis of the calibration curve equation (1) or (2) including the absorption/excitation correction term and the overlap correction term, whereby a lower limit of detection can be appropriately calculated with influences of absorption/excitation correction and overlap correction being reflected.

Meanwhile, known contents W of, and known measured intensities I regarding, correction components j that are set by an operator and that are in a plurality of standard samples 14 selected by the operator are used for formulating the calibration curve equations (3) and (4), and the equations (1) and (2) which are for calculating lower limits of detection and which are obtained on the basis of the formulated calibration curve equations (3) and (4) make it possible to: calculate lower limits of detection LLD in the formulated calibration curve equations (3) and (4); and furthermore, optionally calculate lower limits of detection LLD with a content of, or a measured intensity $C_j$ regarding, each of the correction components j being specified.

Considering this, in the X-ray fluorescence spectrometer according to the present embodiment, the quantification unit 13 calculates, for each of the correction components j used for calculating the lower limit of detection, a lower limit of detection LLD when the content of, or the measured intensity $C_j$ regarding, the correction component j is changed to a specified value, and causes the displaying unit 15 to display the lower limit of detection LLD calculated when the content or the measured intensity $C_j$ has been changed to the specified value.

An operator can specify, for example: a content of, or a measured intensity $C_j$ regarding, the correction component j in each of the standard samples 14; a content of, or a measured intensity $C_j$ regarding, a correction component j in a representative composition having an average value among all the standard samples 14; a content of, or a measured intensity regarding, each of all the correction components j, the content or the measured intensity being 0 and being obtained when neither absorption/excitation correction nor overlap correction is performed; a content (quantitative value) of, or a measured intensity $C_j$ regarding, a correction component j in an unknown sample 1 having been subjected to quantitative analysis; and the like. In this case, it is possible to ascertain, for example: a lower limit of detection in each of the standard samples 14; a lower limit of detection in the representative composition; a lower limit of detection obtained when neither absorption/excitation correction nor overlap correction is performed; a lower limit of detection in each unknown sample 1; and the like. Thus, these lower limits of detection can each be used as a criterion for determining whether or not an appropriate standard sample 14 and an appropriate correction component have been selected.

In addition, in the X-ray fluorescence spectrometer of the present invention, the quantification unit 13 calculates, for each of the correction components j used for calculating the lower limit of detection, a proportion (%) of change in the lower limit of detection when the content of, or the measured intensity $C_j$ regarding, the correction component j is changed in a predetermined proportion (e.g., 10%), and causes the displaying unit 15 to display the proportion (%). In this case, with focus being placed on the absolute value of the proportion in the change, it is possible to ascertain, for example: which of the correction components j has caused the lower limit of detection to deteriorate most significantly; which of the correction components j has caused the lower limit of detection to become most favorable; and the like.

In the above description, the equations for calculating lower limits of detection are each derived from a calibration curve equation regarding gross intensities. Meanwhile, in a case where a correction coefficient and a calibration curve regarding net intensities are obtained through regression calculation, a calibration curve regarding gross intensities is calculated on the basis of an obtained correction coefficient, and an equation for calculating a lower limit of detection is derived from the calibration curve regarding gross intensities.

Although the present invention has been fully described in connection with the preferred embodiment thereof with reference to the accompanying drawing which is used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

[Reference Numerals]

0032

1    unknown sample
3    primary X-rays
5    fluorescent X-rays
13    quantification unit
14    standard sample
15    displaying unit

**Claims**

1. An X-ray fluorescence spectrometer comprising a quantification unit in which a calibration curve method that involves performing absorption/excitation correction and overlap correction is employed, the X-ray fluorescence spectrometer being configured to irradiate a sample with primary X-rays and obtain a content of each component in the sample by the quantification unit on the basis of measured intensities of fluorescent X-rays generated through the irradiation, wherein

   the quantification unit calculates a lower limit of detection of a calibration curve by using an equation (1) or (2) and causes a displaying unit to display the lower limit of detection, the equations (1) and (2) being as follows:

   [Math. 1]

$$L.L.D. = \frac{\partial W_i}{\partial I_i} 3 \cdot \sigma I_{BG}$$

$$= 3\left\{\left(2A\left(I_{BG} + \sum_j \alpha_j I_j^{Ovlp}\right) + B\right)\left(1 + \sum_j M_{ij}C_j\right)\right.$$

$$+ \left(A\left(I_{BG} + \sum_j \alpha_j I_j^{Ovlp}\right)^2 + B\left(I_{BG} + \sum_j \alpha_j I_j^{Ovlp}\right) + C\right)\frac{\partial \sum_j M_{ij}C_j}{\partial I_i}$$

$$\left. + \frac{\partial \sum_j O_{ij}C_j}{\partial I_i}\right\} \cdot \sqrt{\frac{I_{BG}}{1000 \cdot t_{meas}}} \quad \cdots\cdots (1)$$

with,

in a case of A=0,  $I_{BG} = -\frac{C}{B} - \frac{\sum_j O_{ij}C_j}{B\left(1+\sum_j M_{ij}C_j\right)} - \sum_j \alpha_j I_j^{Ovlp}$  being satisfied,

in a case of A $\neq$ 0,  $I_{BG} = \frac{-B + \sqrt{B^2 - 4A\left(C + \frac{\sum_j O_{ij}C_j}{1+\sum_j M_{ij}C_j}\right)}}{2A} - \sum_j \alpha_j I_j^{Ovlp}$  being satisfied, and

a theoretical standard deviation of a BG intensity satisfying  $\sigma I_{BG} = \sqrt{\frac{I_{BG}}{1000 \cdot t_{meas}}}$  ; and

[Math. 2]

$$L.L.D. = \frac{\partial W_i}{\partial I_i} 3 \cdot \sigma I_{BG}$$

$$= 3\left\{B\left(1+\sum_j M_{ij}C_j\right) + B\left(I_{BG}+\sum_j \alpha_j I_j^{Ovlp}\right)\frac{\partial \sum_j M_{ij}C_j}{\partial I_i} + \frac{\partial \sum_j O_{ij}C_j}{\partial I_i}\right\}$$

$$\cdot \sqrt{\frac{I_{BG}}{1000 \cdot t_{meas}}} \quad \cdots\cdots (2)$$

*with*

$I_{BG} = -\frac{C+\sum_j O_{ij}C_j}{B(1+\sum_j M_{ij}C_j)}$ *being satisfied (in a case of B=0, L.L.D. cannot be calculated), and*

*a theoretical standard deviation of a BG intensity satisfying* $\sigma I_{BG} = \sqrt{\frac{I_{BG}}{1000 \cdot t_{meas}}}$ ,

*where*

*$W_i$ represents a content of an analytical component i,*
*A, B, and C represent calibration curve constants,*
*$I_i$ represents a measured intensity of analytical lines of the component i,*
*$\alpha_j$ represents an overlap correction coefficient of overlap lines j,*
*$I_j^{Ovlp}$ represents a measured intensity of the overlap lines j,*
*$M_{ij}$ represents an absorption/excitation correction coefficient of a component j with respect to the component i,*
*$C_j$ represents a content of the component j or an intensity of analytical lines of the component j,*
*$O_{ij}$ represents an overlap correction coefficient of the component j with respect to the component i,*
*$I_{BG}$ represents a background intensity,*
*$\sigma I_{BG}$ represents a theoretical standard deviation of the background intensity, and*
*$t_{meas}$ represents a measurement time.*

2. The X-ray fluorescence spectrometer as claimed in claim 1, wherein

the quantification unit
calculates, for each of correction components used for calculating the lower limit of detection, a lower limit of detection when a content of, or a measured intensity regarding, the correction component is changed to a specified value, and
causes the displaying unit to display the lower limit of detection calculated when the content or the measured intensity has been changed to the specified value.

3. The X-ray fluorescence spectrometer as claimed in claim 1, wherein

the quantification unit
calculates, for each of correction components used for calculating the lower limit of detection, a proportion of change in the lower limit of detection when a content of, or a measured intensity regarding, the correction component is changed in a predetermined proportion, and
causes the displaying unit to display the proportion calculated when the content or the measured intensity has been changed in the predetermined proportion.

Fig. 1

## INTERNATIONAL SEARCH REPORT

| International application No. |
| --- |
| **PCT/JP2024/005269** |

### A. CLASSIFICATION OF SUBJECT MATTER

*G01N 23/223*(2006.01)i; *G01N 23/2209*(2018.01)i
FI: G01N23/223; G01N23/2209

According to International Patent Classification (IPC) or to both national classification and IPC

### B. FIELDS SEARCHED

Minimum documentation searched (classification system followed by classification symbols)

G01N23/00-G01N23/2276

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2009-74954 A (RIGAKU CORP.) 09 April 2009 (2009-04-09)<br>paragraphs [0012]-[0039], fig. 1 | 1-3 |
| Y | JP 2000-275195 A (RIGAKU INDUSTRIAL CORPORATION) 06 October 2000 (2000-10-06)<br>paragraphs [0012]-[0028] | 1-3 |
| Y | JP 2004-212406 A (RIGAKU INDUSTRIAL CORPORATION) 29 July 2004 (2004-07-29)<br>paragraphs [0014]-[0017] | 1-3 |
| Y | JP 2008-309742 A (SHIMADZU CORPORATION) 25 December 2008 (2008-12-25)<br>paragraphs [0020]-[0023] | 1-3 |
| A | JP 2020-186929 A (CENTRAL RESEARCH INSTITUTE OF ELECTRIC POWER INDUSTRY) 19 November 2020 (2020-11-19) | 1-3 |
| A | JP 2019-203764 A (CENTRAL RESEARCH INSTITUTE OF ELECTRIC POWER INDUSTRY) 28 November 2019 (2019-11-28) | 1-3 |

☑ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 March 2024** | **26 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/005269**

| C. | DOCUMENTS CONSIDERED TO BE RELEVANT | |
|---|---|---|
| Category* | Citation of document, with indication, where appropriate, of the relevant passages | Relevant to claim No. |
| A | JP 2006-132945 A (SII NANOTECHNOLOGY INC.) 25 May 2006 (2006-05-25) | 1-3 |
| A | JP 2006-119108 A (FUJITSU LIMITED) 11 May 2006 (2006-05-11) | 1-3 |

Form PCT/ISA/210 (second sheet) (July 2022)

### INTERNATIONAL SEARCH REPORT
Information on patent family members

International application No.

**PCT/JP2024/005269**

| Patent document cited in search report | | | Publication date (day/month/year) | Patent family member(s) | Publication date (day/month/year) |
|---|---|---|---|---|---|
| JP | 2009-74954 | A | 09 April 2009 | (Family: none) | |
| JP | 2000-275195 | A | 06 October 2000 | (Family: none) | |
| JP | 2004-212406 | A | 29 July 2004 | (Family: none) | |
| JP | 2008-309742 | A | 25 December 2008 | (Family: none) | |
| JP | 2020-186929 | A | 19 November 2020 | (Family: none) | |
| JP | 2019-203764 | A | 28 November 2019 | (Family: none) | |
| JP | 2006-132945 | A | 25 May 2006 | US 2006/0093085 A1 | |
| JP | 2006-119108 | A | 11 May 2006 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023027358 A

- JP 2006132945 A